# EUROPÄISCHE PATENTANMELDUNG

(11) **EP 1 154 304 A1**
(43) Veröffentlichungstag der Anmeldung: **14.11.2001**
(21) Anmeldenummer: 01107432.5
(22) Anmeldetag: 27.03.2001
(51) Int. Cl.: G02F 1/133, B60K 37/00

(54) **Flüssigkristallzelle mit Schaltzeitmesseinrichtung zur Temperatur- oder Kontrastregelung und Verfahren zur Regelung einer solchen Zelle**

(30) Priorität: 12.05.2000 DE 10023147
(71) Anmelder: Mannesmann VDO Aktiengesellschaft, 60388 Frankfurt am Main (DE)
(72) Erfinder: Brandt, Peter, 63739 Aschaffenburg (DE); Weissenberger, Stefan, 63741 Aschaffenburg (DE)
(74) Vertreter: Rassler, Andrea, Dipl.-Phys.

(57) **Zusammenfassung**

Eine Flüssigkristallzelle (1) hat eine Messeinrichtung (3) für die Regelung zumindest eines von der Temperatur der Flüssigkristallsubstanz abhängigen Parameters. Diese Messeinrichtung (3) ist zur Bestimmung der Schaltzeit der Flüssigkristallzelle (1) ausgebildet und weist hierzu eine Lichtquelle (4) auf, die Licht durch ein einzeln schaltbares Segment der Flüssigkristallzelle (1) zu senden vermag. Weiterhin hat die Messeinrichtung (3) einen Photosensor (7), der das durch die Flüssigkristallzelle (1) gelangende Licht empfängt. Das einzeln schaltbare Segment (5) wird für die Messung mit einer vorgegebenen Blinkfrequenz angesteuert.

## Beschreibung

Die Erfindung betrifft ein Verfahren zum Regeln zumindest eines Parameters einer Flüssigkristallzelle, insbesondere in einem Kraftfahrzeug, welcher von der Temperatur der Flüssigkristallsubstanz beeinflusst wird. Weiterhin betrifft die Erfindung eine Flüssigkristallzelle, insbesondere in einem Kraftfahrzeug, mit einer Messeinrichtung für die Regelung zumindest eines von der Temperatur der Flüssigkristallsubstanz abhängigen Parameters.

Die Funktion von Flüssigkristallzellen wird relativ stark von der Temperatur der Flüssigkristallsubstanz beeinflusst. Insbesondere nimmt die Schaltzeit bei niedrigen Temperaturen stark zu, was es bei Flüssigkristallanzeigen in Kraftfahrzeugen häufig erforderlich macht, die Flüs-sigkristallzelle mit einer elektrischen Heizung zu versehen. Ebenfalls stark abhängig von der Temperatur der Flüssigkristallsubstanz ist der Kontrast der Anzeige, so dass bei höheren Anforderungen an die Anzeigequalität eine Regelung der LCD-Kontrastspannung in dem Sinne erforderlich wird, dass die Kontrastspannung mit zunehmender Temperatur abgesenkt wird.

Zur Regelung von Parametern einer Flüssigkristallzelle ist es bekannt, außenseitig auf die Flüssigkristallzelle einen Temperatursensor anzubringen. Insbesondere versieht man die COG-Treiber mit einem solchen Temperatursensor. Der Temperatursensor muss relativ weit entfernt vom sichtbaren Bereich der Flüssigkristallzelle angebracht werden, damit er auf dem Display nicht zu sehen ist. Dadurch kommt es insbesondere bei raschen Temperaturänderungen zu falschen Messergebnissen. Insbesondere während der relativ kurzen Aufheizphase nach dem Start eines Kraftfahrzeugs bei sehr niedrigen Temperaturen unterscheidet sich die Temperatur am Sensor deutlich von der Temperatur der Flüssigkristallsubstanz, so dass beispielsweise die LCD-Kontrastspannung nur unbefriedigend geregelt werden kann.

Der Erfindung liegt das Problem zugrunde, ein Verfahren der eingangs genannten Art zu entwickeln, welches eine möglichst zuverlässige Regelung von temperaturabhängigen Parametern einer Flüssigkristallzelle erlaubt. Weiterhin soll eine nach diesem Verfahren regelbare Flüssigkristallzelle geschaffen werden.

Das erstgenannte Problem wird erfindungsgemäß dadurch gelöst, dass für die Regelung die jeweilige, von der Temperatur der Flüssigkristallsubstanz abhängige Schaltzeit der Flüssigkristallzelle bestimmt wird.

Bei diesem Verfahren wird zur Regelung von temperaturabhängigen Parametern einer Flüssigkristallzelle nicht wie bisher üblich die Temperatur der Flüssigkristallsubstanz, sondern eine Größe bestimmt, die von der Temperatur besonders stark beeinflusst wird und auf die es bei Flüssigkeitszellen stark ankommt. Die Schaltzeit lässt sich mit verhältnismäßig geringem Aufwand wesentlich genauer bestimmen als die Temperatur in der Flüssigkristallzelle und gibt zuverlässig Aufschluss über die Temperatur in der Flüssigkristallzelle. In vielen Fällen kommt es nur darauf an, durch Erhöhung der Temperatur der Flüssigkristallsubstanz kurze Schaltzeiten zu erreichen, so dass durch die erfindungsgemäße Bestimmung der Schaltzeit genau das gemessen wird, was durch die Regelung der Flüssigkristallzelle beeinflusst werden soll. Vor allem in Kraftfahrzeugen, die regelmäßig auch bei niedrigen Umgebungstemperaturen verkehrssicher betreibbar sein müssen, ist das erfindungsgemäße Verfahren von erheblichem Vorteil.

Die Regelung der LCD-Kontrastspannung macht während der Aufheizphase von Flüssigkristallzellen Schwierigkeiten, weil sich dann ein sehr rascher Temperaturanstieg ergibt, der von einem Temperatursensor nur ungenau erfasst werden kann. Eine besonders genaue Regelung der LCD-Kontrastspannung wird möglich, wenn gemäß einer vorteilhaften Weiterbildung des erfindungsgemäßen Verfahrens in Abhängigkeit von der Schaltzeit die LCD-Kontrastspannung geregelt wird.

Da durch die Heizung die Temperatur der Flüssigkristallsubstanz angehoben und dadurch die Schaltzeit verkürzt wird, ist es vorteilhaft, wenn in Abhängigkeit von der Schaltzeit die Spannung einer elektrischen Heizung der Flüssigkristallzelle geregelt wird. Bei dieser Verfahrensweise braucht man sich letztlich nicht um die Temperatur der Flüssigkristallsubstanz zu kümmern, vielmehr stellt man diese stets so ein, dass sich eine gewünschte, kurze Schaltzeit ergibt.

Die Schaltzeit lässt sich sehr einfach bestimmen, indem sie durch Umschalten eines Segmentes der Flüssigkristallzelle und dieses Segment durchdringendes Licht ermittelt wird.

Eine kontinuierliche Bestimmung der Schaltzeit und damit eine rasche Erfassung der Veränderung der Schaltzeit wird möglich, wenn gemäß einer anderen Weiterbildung der Erfindung das Segment mit einer festgelegten Blinkfrequenz angesteuert und die Frequenz des durch das Segment hindurchtretenden Lichtes bestimmt wird.

Das zweitgenannte Problem, nämlich die Schaffung einer Flüssigkristallzelle mit einer Messeinrichtung für die Regelung zumindest eines von der Temperatur der Flüssigkristallsubstanz abhängigen Parameters, wird erfindungsgemäß dadurch gelöst, dass die Messeinrichtung zur Bestimmung der Schaltzeit der Flüssigkristallzelle ausgebildet ist.

Durch eine solche Messeinrichtung ist ein sehr genaues Regeln temperaturabhängiger Parameter der Flüssigkristallzelle möglich, weil die Schaltzeit von der Temperatur der Flüssigkristallsubstanz stark beeinflusst wird und das Erreichen kurzer Schaltzeiten für viele Anwendungsfälle (vor allem auch im Kraftfahrzeug) ein primäres Ziel ist. Weiterhin erlaubt die Ermittlung der Schaltzeit eine sehr rasche Erfassung von Änderungen der Temperatur der Flüssigkristallsubstanz, so dass auch während der Aufheizphase der Flüssigkristallzelle durch eine elektrische Heizung eine genaue Regelung temperaturabhängiger Parameter möglich wird.

Besonders einfach ist die Flüssigkristallzelle gestaltet, wenn die Messeinrichtung eine ein für die Messung separat schaltbares Segment der Flüssigkristallzelle durchleuchtende Lichtquelle und einen Photosensor hat.

Die Messeinrichtung ist bei einer Flüssigkristallanzeige für einen Betrachter unsichtbar, wenn die Lichtquelle und der Photosensor an der Innenseite der Flüssigkristallzelle angeordnet sind und außenseitig im Bereich des schaltbaren Segmentes ein Reflektor angeordnet ist.

Besonders rasch lassen sich Veränderungen der Schaltzeiten ermitteln, wenn die Messeinrichtung Mittel zur Bestimmung der Frequenz eines auf sie gelangenden Lichtsignals hat.

Die LCD-Kontrastspannung lässt sich auch während kurzer Aufheizphasen durch Aktivierung einer elektrischen Heizung der Flüssigkristallzelle zuverlässig regeln, wenn gemäß einer anderen Weiterbildung der Erfindung die Messeinrichtung eingangsseitig mit einer LCD-Kontrastspannung verbunden ist.

Auch für die Regelung der Heizung selbst kann man auf einen Temperatursensor verzichten und damit durch den Temperatursensor bedingte Ungenauigkeiten vermeiden, wenn die Messeinrichtung eingangsseitig mit einer Spannungsregelung einer Heizung der Flüssigkristallzelle verbunden ist.

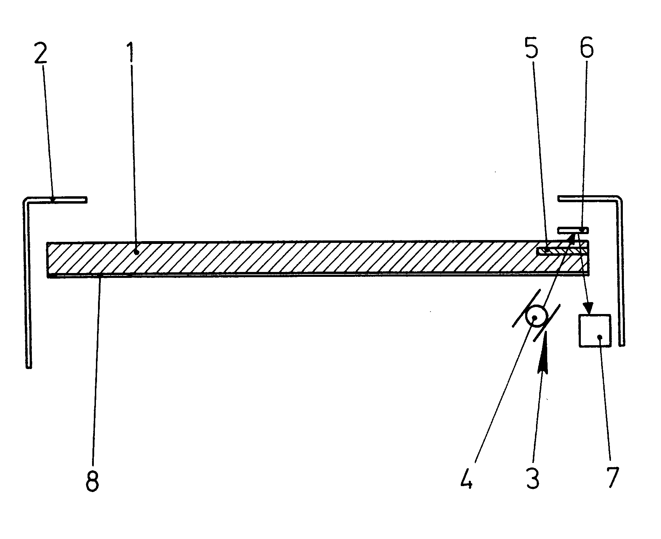

Die Erfindung lässt verschiedene Ausführungsformen zu. Zur weiteren Verdeutlichung ihres Grundprinzips ist eine davon in der Zeichnung stark schematisch dargestellt und wird nachfolgend beschrieben.

Die Zeichnung zeigt eine Flüssigkristallzelle 1, die von einem über ihren Randbereich greifenden Displayrahmen 2 eingefasst ist. Zur Bestimmung der Schaltzeit der Flüssigkristallzelle 1 dient eine Messeinrichtung 3. Diese hat eine Lichtquelle 4, mit der Licht durch ein schaltbares Segment 5 der Flüssigkristallzelle 1 geschickt werden kann. Dieses Licht wird von einem auf der Außenseite der Flüssigkristallzelle 1 unterhalb ihres Displayrahmens 2 angebrachten Reflektor 6 zurück zu einem auf der Seite der Lichtquelle 4 angebrachten Photosensor 7 reflektiert.

Zur Bestimmung der Schaltgeschwindigkeit steuert man das schaltbare Segment 5 mit einer vorgegebenen Blinkfrequenz an, so dass die Flüssigkristallzelle im Bereich dieses Segmentes 5 abwechselnd lichtdurchlässig und lichtundurchlässig wird. Entsprechend erhält der Photosensor 7 Lichtsignale mit einer bestimmten Frequenz. Der Frequenzunterschied zwischen der vorgegebenen Blinkfrequenz und der erfassten Blinkfrequenz erlaubt es, auf die Schaltzeit der Flüssigkristallzelle zu schließen.

Aufgrund der ermittelten Schaltzeit kann man beispielsweise die Spannung einer elektrischen Heizung 8 der Flüssigkristallzelle 1 regeln. Weiterhin ist es beispielsweise möglich, eine LCD-Kontrastspannung der Flüssigkristallzelle in Abhängigkeit von den ermittelten Schaltzeiten optimal zu regeln.

## Patentansprüche

1. Verfahren zum Regeln zumindest eines Parameters einer Flüssigkristallzelle, insbesondere in einem Kraftfahrzeug, welcher von der Temperatur der Flüssigkristallsubstanz beeinflusst wird, **dadurch gekennzeichnet, dass** für die Regelung die jeweilige, von der Temperatur der Flüssigkristallsubstanz abhängige Schaltzeit der Flüssigkristallzelle bestimmt wird.

2. Verfahren nach Anspruch 1, **dadurch gekennzeichnet, dass** in Abhängigkeit von der Schaltzeit die LCD-Kontrastspannung geregelt wird.

3. Verfahren nach Anspruch 1, **dadurch gekennzeichnet, dass** in Abhängigkeit von der Schaltzeit die Spannung einer elektrischen Heizung der Flüssigkristallzelle geregelt wird.

4. Verfahren nach zumindest einem der vorangehenden Ansprüche, **dadurch gekennzeichnet, dass** die Schaltzeit durch Umschalten eines Segmentes der Flüssigkristallzelle und dieses Segment durchdringendes Licht ermittelt wird.

5. Verfahren nach Anspruch 4, **dadurch gekennzeichnet, dass** das Segment mit einer festgelegten Blinkfrequenz angesteuert und die Frequenz des durch das Segment hindurchtretenden Lichtes bestimmt wird.

6. Flüssigkristallzelle, insbesondere in einem Kraftfahrzeug, mit einer Messeinrichtung für die Regelung zumindest eines von der Temperatur der Flüssigkristallsubstanz abhängigen Parameters, **dadurch gekennzeichnet, dass** die Messeinrichtung (3) zur Bestimmung der Schaltzeit der Flüssigkristallzelle (1) ausgebildet ist.

7. Flüssigkristallzelle nach Anspruch 6, **dadurch gekennzeichnet, dass** die Messeinrichtung (3) eine ein für die Messung separat schaltbares Segment (5) der Flüssigkristallzelle (1) durchleuchtende Lichtquelle (4) und einen Photosensor (7) hat.

8. Flüssigkristallzelle nach den Ansprüchen 6 oder 7, **dadurch gekennzeichnet, dass** die Lichtquelle (4) und der Photosensor (7) an der Innenseite der Flüssigkristallzelle (1) angeordnet sind und außenseitig im Bereich des schaltbaren Segmentes (5) ein Reflektor (6) angeordnet ist.

9. Flüssigkristallzelle nach zumindest einem der Ansprüche 6 bis 8, **dadurch gekennzeichnet, dass** sie Mittel zur Bestimmung der Frequenz eines auf sie gelangenden Lichtsignals hat.

10. Flüssigkristallzelle nach zumindest einem der Ansprüche 6 bis 9, **dadurch gekennzeichnet, dass** die Messeinrichtung (3) eingangsseitig mit einer LCD-Kontrastspannung verbunden ist.

11. Flüssigkristallzelle nach zumindest einem der Ansprüche 6 bis 10, **dadurch gekennzeichnet, dass** die Messeinrichtung (3) eingangsseitig mit einer Spannungsregelung einer Heizung (8) der Flüssigkristallzelle (1) verbunden ist.
